# EUROPÄISCHE PATENTANMELDUNG

(11) **EP 4 697 238 A1**
(43) Veröffentlichungstag der Anmeldung: **18.02.2026**
(21) Anmeldenummer: 24194499.0
(22) Anmeldetag: 14.08.2024
(51) Int. Cl.: G06N 3/08

(54) **VORRICHTUNG UND COMPUTERIMPLEMENTIERTES VERFAHREN ZUR BEREITSTELLUNG VON SENSORDATEN**

(71) Anmelder: Robert Bosch GmbH, 70442 Stuttgart (DE)
(72) Erfinder: Woehrle, Matthias, 74321 Bietigheim-Bissingen (DE)

(57) **Zusammenfassung**

Eine Vorrichtung und ein computerimplementiertes Verfahren zur Bereitstellung von Sensordaten, wobei ein neuronales Netzwerk eine gewöhnliche Differentialgleichung zur Bereitstellung von Sensordaten modelliert, sieht vor dass die Sensordaten in einer Zeitreihe (200) bereitgestellt werden, wobei aus den Sensordaten Trainingsdatensätze mit zunehmend längeren Segmenten (202) aus der Zeitreihe (200) bestimmt werden, und das neuronale Netzwerk mit den Trainingsdatensätzen mit zunehmender Länge der Segmente (202) zur Vorhersage einer Lösung der gewöhnlichen Differentialgleichung trainiert wird.

## Beschreibung

### Stand der Technik

Die Erfindung betrifft eine Vorrichtung und computerimplementiertes Verfahren zur Bereitstellung von Sensordaten.

Sensordaten können durch eine Abbildung von virtuellen Modellen von Zeitserien als sogenannte Neural ODEs bereitgestellt werden.

Neural Ordinary Differential Equations https://arxiv.org/abs/1806.07366 beschreibt Neural ODEs, bei denen eine Differenzialgleichung (teilweise) als Neuronales Netz abgebildet wird.

Ein Training dieser Modelle ist schwierig, da die Trainierbarkeit mittels einer mittleren quadratischen Abweichung und die für die Effizienz des Trainings erforderliche Parallelisierung mit Batches in Kontrast steht mit dem Gütekriterium einer guten, langfristigen Prädiktion.

### Offenbarung der Erfindung

Ein computerimplementiertes Verfahren zur Bereitstellung von Sensordaten, wobei ein neuronales Netzwerk eine gewöhnliche Differentialgleichung zur Bereitstellung von Sensordaten modelliert, sieht vor, dass die Sensordaten in einer Zeitreihe bereitgestellt werden, wobei aus den Sensordaten Trainingsdatensätze mit zunehmend längeren Segmenten aus der Zeitreihe bestimmt werden, und das neuronale Netzwerk mit den Trainingsdatensätzen mit zunehmender Länge der Segmente zur Vorhersage einer Lösung der gewöhnlichen Differentialgleichung trainiert wird. Ein Trainingsdatensatz stellt ein Batch zum Training des neuronalen Netzwerks dar. Durch Training mit zunehmend längeren Segmenten in den Batches wird das neuronale Netzwerk effizient und automatisch dazu trainiert, eine langfristige Dynamik der Sensordaten abzubilden.

Es kann vorgesehen sein, dass aus den Sensordaten Trainingsdatensätze bestimmt werden, die eine mit zunehmend längeren Segmenten aus der Zeitreihe abnehmende Anzahl von Segmenten umfassen. Dadurch wird die Anzahl der Segmente automatisch an die Länge der Segmente angepasst.

Beispielsweise ist vorgesehen, dass die Sensordaten mit einer Gesamtlänge bereitgestellt werden, wobei als vorgegebene Länge ein ganzzahliger Teiler der Gesamtlänge vorgegeben wird, wobei die Länge der Segmente im zweiten Trainingsdatensatz als ganzzahliges Vielfaches der vorgegebenen Länge und ganzzahliger Teiler der Gesamtlänge bestimmt wird. Dadurch wird die Länge der Segmente automatisch angepasst.

Beispielsweise ist vorgesehen, dass eine Anzahl der Segmente im ersten Trainingsdatensatz vorgegeben wird, die vorgegebene Anzahl von Segmenten im ersten Trainingsdatensatz zusammengefasst werden, eine Anzahl der Segmente im zweiten Trainingsdatensatz bestimmt wird, die kleiner als die vorgegebene Anzahl der Segmente im ersten Trainingsdatensatz ist, und die bestimmte Anzahl von Segmenten im zweiten Trainingsdatensatz zusammengefasst werden. Dadurch werden Länge und Anzahl der Segmente automatisch angepasst.

Die Segmente umfassen z.B. jeweils einen Anfangswert aus der Zeitreihe und zu einem Endzeitpunkt des Segments einen Endwert aus der Zeitreihe, wobei das neuronale Netzwerk dazu trainiert wird, ausgehend vom Anfangswert des jeweiligen Segments den Endwert des jeweiligen Segments zum Endzeitpunkt des jeweiligen Segments vorherzusagen. Dadurch wird das neuronale Netz dazu trainiert, die Vorhersage für ein Fenster aus den Sensordaten zu bestimmen, das beim Anfangswert beginnt und mit dem Endwert endet.

Es kann vorgesehen sein, dass das neuronale Netz für wenigstens einen Trainingsdatensatz mit dem Mehrfachschießverfahren zur Vorhersage der Lösung der gewöhnlichen Differentialgleichung trainiert wird. Das Mehrfachschießverfahren erhöht die Genauigkeit der Vorhersage, da dadurch implizit einzelne Trainingsdatensätze zu einem langen einzelnen Datensatz zusammengefügt werden können.

Es kann vorgesehen sein, dass mehrere Trainingsdatensätze bestimmt werden, die Segmente derselben Länge umfassen, wobei das neuronale Netzwerk mit mehreren der Trainingsdatensätzen trainiert wird, die die Segmente derselben Länge umfassen. Das bedeutet, mehrere Batches umfassen Segmente derselben Länge. Dadurch wird das neuronale Netzwerk effizient für eine in den Segmenten derselben Länge enthaltene Dynamik der bereitgestellten Sensordaten trainiert.

Es kann vorgesehen sein, dass das neuronale Netzwerk mit den Trainingsdatensätzen, die die Segmente derselben Länge umfassen, trainiert wird, bis erkannt wird, dass ein Abbruchkriterium erfüllt ist, und das neuronale Netzwerk mit den Trainingsdatensätzen mit zunehmender Länge der Segmente trainiert wird, wenn erkannt wird dass das Abbruchkriterium erfüllt ist. Das bedeutet, das neuronale Netzwerk wird bis das Abbruchkriterium erfüllt ist, in einer Epoche trainiert, die mehrere Trainingsdatensätze, d.h. Batches, mit Segmenten derselben Länge umfasst.

Es kann vorgesehen sein, dass Validierungsdaten bestimmt werden, wobei die Validierungsdaten ein Segment oder mehrere Segmente aus der Zeitreihe oder aus verschiedenen Zeitreihen umfassen, wobei die Vorhersage für die Validierungsdaten bestimmt wird, wobei eine Güte der Vorhersage abhängig von den Validierungsdaten bestimmt wird, und wobei das Abbruchkriterium erfüllt ist, wenn die Güte der Vorhersage nach dem Training des neuronalen Netzwerks mit aufeinanderfolgenden Trainingsdatensätzen unverändert ist oder sich um weniger als einen vorgegebenen Wert verbessert. Dies ist ein Beispiel für ein Abbruchkriterium. Andere Abbruchkriterien sind z.B. in Prechelt, L. (2012). Early Stopping - But When?. In: Montavon, G., Orr, G.B., Müller, KR. (eds) Neural Networks: Tricks of the Trade. Lecture Notes in Computer Science, vol 7700. Springer, Berlin, Heidelberg. https://doi.org/10.1007/978-3-642-35289-8_5 beschrieben.

Es kann vorgesehen sein, dass das neuronale Netzwerk nach dem Training mit den Trainingsdatensätzen mit zunehmender Länge der Segmente mit einem Trainingsdatensatz trainiert wird, der die Sensordaten aus der Zeitreihe umfasst. Das bedeutet, das neuronale Netzwerk wird zur Vorhersage für den durch die Zeitreihe bereitgestellten gesamten Prädiktionshorizont trainiert.

Es kann vorgesehen sein, dass ein Anfangswert für eine Zeitreihe von Sensordaten bereitgestellt wird, und mit dem trainierten neuronalen Netzwerk in mehreren Iterationen Vorhersagen der Lösung der gewöhnlichen Differentialgleichung bestimmt werden, wobei die Vorhersage in einer initialen Iteration abhängig vom Anfangswert als Eingangsgröße des trainierten neuronalen Netzwerks bestimmt wird, und die Vorhersage der Lösung der auf die initiale Iteration folgenden Iterationen jeweils abhängig von der Vorhersage der Lösung der jeweils vorangegangenen Iteration bestimmt werden, wobei die aufeinanderfolgenden Vorhersagen der Lösung die Sensordaten der Zeitreihe darstellen. Das bedeutet, das trainierte neuronale Netzwerk sagt als virtueller Sensor ausgehend vom Anfangswert eine Zeitreihe von Sensordaten vorher.

Es kann vorgesehen sein, dass die Sensordaten eine Drehzahl oder eine Temperatur, insbesondere eines Motors, umfassen, insbesondere wobei die Drehzahl mit einem Drehzahlfühler oder die Temperatur mit einem Temperatursensor erfasst wird, oder wobei die Sensordaten einen Lenkwinkel oder eine Gierrate oder eine Beschleunigung insbesondere eines Fahrzeugs, umfassen, insbesondere wobei der Lenkwinkel mit einem Lenkwinkelsensor oder die Gierrate mit einem Gierratensensor oder die Beschleunigung mit einem Beschleunigungssensor erfasst wird.

Eine Vorrichtung zur Bereitstellung von Sensordaten, insbesondere ein Sensor, sieht vor, dass die Vorrichtung ein neuronales Netzwerk umfasst, wobei das neuronale Netzwerk eine gewöhnliche Differentialgleichung zur Bereitstellung von Sensordaten modelliert, wobei die Vorrichtung wenigstens einen Prozessor und wenigstens einen Speicher umfasst, wobei der wenigstens eine Speicher vom wenigstens einen Prozessor ausführbare Instruktionen umfasst, bei deren Ausführung durch den wenigstens einen Prozessor die Vorrichtung das Verfahren ausführt.

Ein Computerprogramm sieht vor, dass das Computerprogramm von einem Computer ausführbare Instruktionen umfasst, bei deren Ausführung durch den Computer das Verfahren abläuft.

Weitere Ausführungsformen sind der folgenden Beschreibung und der Zeichnung entnehmbar. In der Zeichnung zeigt:
Fig. 1 eine schematische Darstellung einer Vorrichtung zur Bereitstellung von Sensordaten,
Fig. 2 eine Zeitreihe von Sensordaten,
Fig. 3 eine schematische Darstellung einer Aufteilung eines Teils der Sensordaten in Segmente und eine Zusammenfassung der Segmente zu einem Trainingsdatensatz,
Fig. 4 eine schematische Darstellung des Teils der Sensordaten im Trainingsdatensatz,
Fig. 5 ein Flussdiagramm mit Schritten eines Verfahrens zur Bereitstellung von Sensordaten,
Fig. 6 ein beispielhafter Trainingsverlauf.

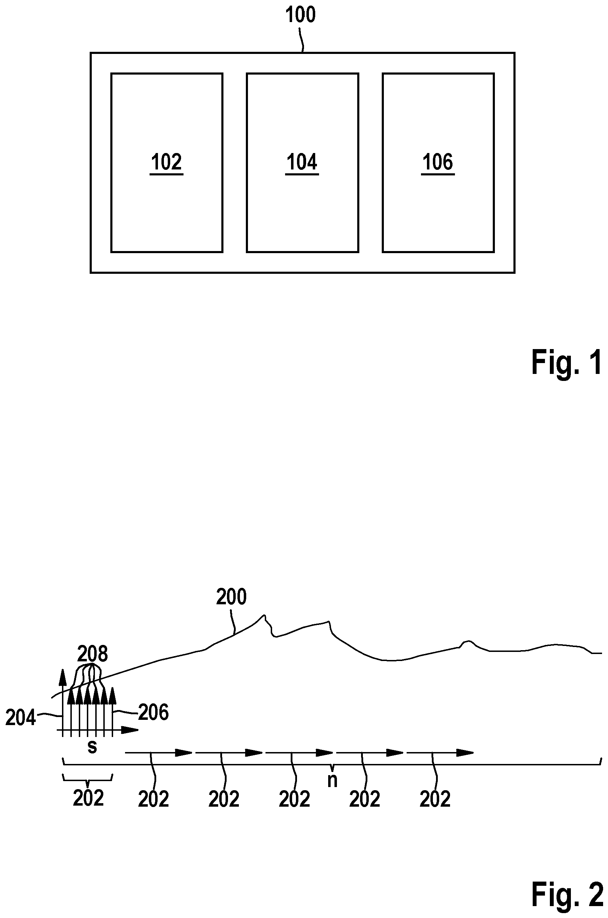

In Figur 1 ist eine Vorrichtung 100 zur Bereitstellung von Sensordaten schematisch dargestellt.

Die Vorrichtung 100 umfasst wenigstens einen Prozessor 102 und wenigstens einen Speicher 104. Der wenigstens eine Prozessor 102 ist ausgebildet, Instruktionen auszuführen, bei deren Ausführung durch den wenigstens einen Prozessor 102 die Vorrichtung 100 ein Verfahren zur Bereitstellung von Sensordaten ausführt. Der wenigstens eine Speicher 104 ist ausgebildet, die Instruktionen zu speichern. Der wenigstens eine Speicher 104 umfasst z.B. einen volatilen Speicher und/oder einen nicht-volatilen Speicher.

Es kann vorgesehen sein, dass die Vorrichtung 100 eine Schnittstelle 106 umfasst.

Die Schnittstelle 106 ist z.B. ausgebildet, einen Anfangswert einer Zeitreihe von Sensordaten oder eine Zeitreihe von Sensordaten zu empfangen.

Die Schnittstelle 106 ist z.B. ausgebildet, einen Endwert der Zeitreihe von Sensordaten oder die Zeitreihe von Sensordaten auszugeben.

In Figur 2 ist eine beispielhafte Zeitreihe 200 von Sensordaten dargestellt. Die Zeitreihe 200 umfasst Segmente 202 von Sensordaten. Ein beispielhaftes Segment 202 der Länge s=7 mit einem Anfangswert 204 und einem Endwert 206 ist in Figur 2 schematisch dargestellt. Zwischen dem Anfangswert 202 und dem Endwert 204 umfasst das beispielhafte Segment 202 fünf aufeinanderfolgende Werte 208. Die Segmente 202 stellen Fenster dar. Im Beispiel sind n Fenster vorgesehen.

Die Vorrichtung 100 umfasst ein neuronales Netzwerk. Das neuronale Netzwerk modelliert eine gewöhnliche Differentialgleichung zur Bereitstellung von Sensordaten.

Das neuronale Netzwerk zur Vorhersage der Lösung der gewöhnlichen Differentialgleichung ist z.B. wie in "Neural Ordinary Differential Equations" beschrieben implementiert.

Die Vorrichtung 100 ist ausgebildet, mit dem neuronalen Netzwerk ausgehend von einem Anfangswert einer Zeitreihe von Sensordaten als Eingangsgröße des neuronalen Netzwerks, eine Vorhersage zur Lösung der gewöhnlichen Differentialgleichung zu bestimmen, die einen Endwert der modellierten Zeitreihe darstellt. Das bedeutet, die Vorrichtung 100 ist als Sensor ausgebildet, wobei der Sensor die Sensordaten bereitstellt.

Die Vorrichtung 100 kann zum Training des neuronalen Netzwerks mit vorgegebenen Sensordaten ausgebildet sein.

Zum Training ist eine Aufteilung der vorgegebenen Sensordaten in Segmente und eine Zusammenfassung der Segmente zu einem Trainingsdatensatz vorgesehen.

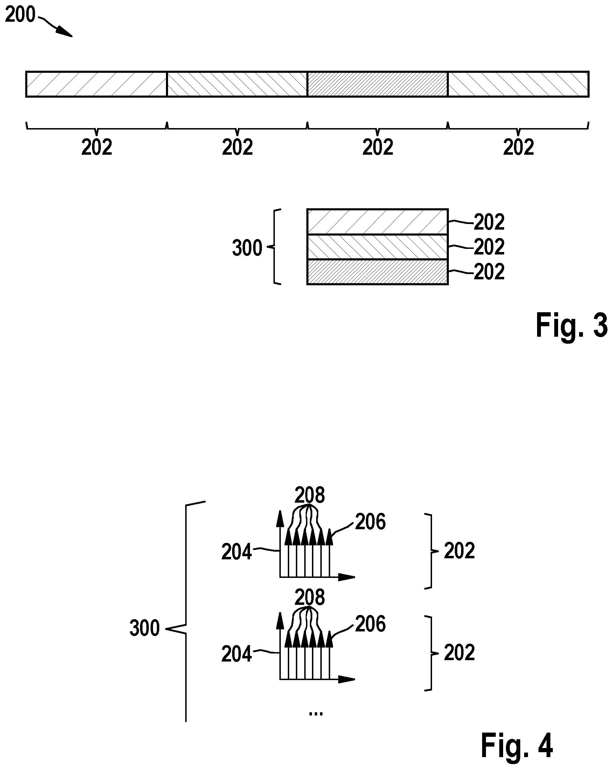

In Figur 3 ist eine schematische Darstellung einer beispielhaften Aufteilung eines Teils der Sensordaten 200 in Segmente 202 und eine beispielhafte Zusammenfassung von drei der vier in Figure 3 dargestellten aufeinanderfolgenden Segmenten 202 zu einem beispielhaften Trainingsdatensatz 300 schematisch dargestellt.

Im Beispiel werden die ersten drei aufeinanderfolgenden Segmente 202 zusammengefasst, wobei das vierte Segment nicht genutzt für den beispielhaften Trainingsdatensatz 300 verwendet wird. In einem Trainingsdatensatz können mehr oder weniger als drei Segmente 202 zusammengefasst sein. Beispielsweise wird ein Trainingsdatensatz vorgesehen, der die vier Segmente umfasst. Es kann vorgesehen sein, dass ein anderer Trainingsdatensatz bestimmt wird, der das vierte Segment umfasst.

In Figur 4 ist eine schematische Darstellung des Teils der Sensordaten im Trainingsdatensatz 300 dargestellt. Die Segmente 202 im Trainingsdatensatz 300 umfassen jeweils eine Anfangswert 204 und einen Endwert 206.

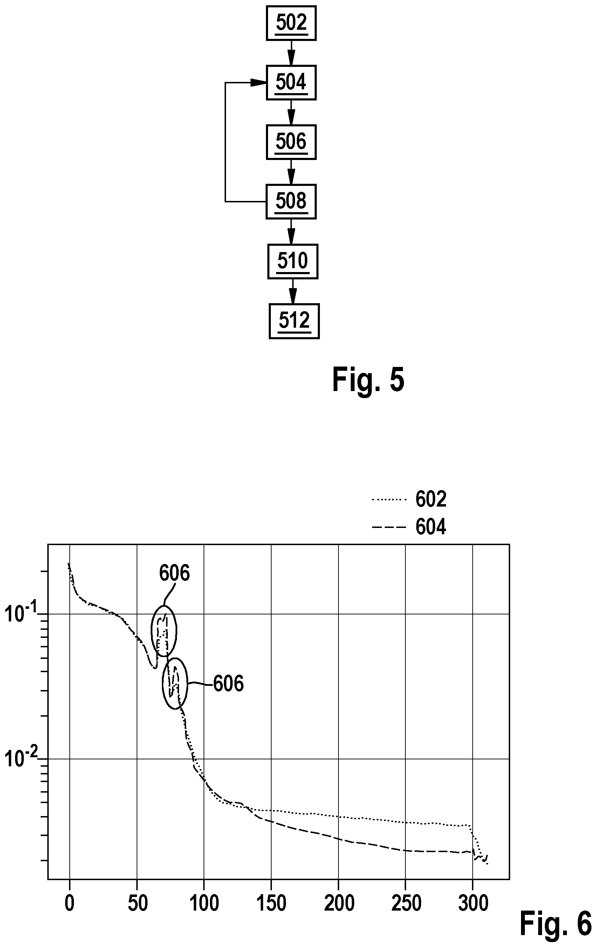

In Figur 5 ist ein Flussdiagramm mit Schritten eines Verfahrens zur Bereitstellung von Sensordaten dargestellt.

Das Verfahren sieht ein Training des neuronalen Netzes vor.

Das Training wird am Beispiel einer vorgegebenen Zeitreihe von Sensordaten beschrieben.

Die Sensordaten umfassen z.B. Drehzahlen, insbesondere eines Motors. Die Drehzahl wird z.B. von einem Drehzahlfühler am Motor erfasst. Die Sensordaten umfassen z.B. Temperaturen, insbesondere des Motors. Die Temperatur wird z.B. von einem Temperatursensor am Motor erfasst.

Die Sensordaten umfassen z.B. Lenkwinkel, insbesondere einer Lenkung eines Fahrzeugs. Der Lenkwinkel wird z.B. von einem Lenkwinkelsensor im Fahrzeug erfasst. Die Sensordaten umfassen z.B. Gierraten, insbesondere eines Fahrzeugs. Die Gierrate wird z.B. von einem Gierratenssensor im Fahrzeug erfasst. Die Sensordaten umfassen z.B. Beschleunigungen, insbesondere eines Fahrzeugs. Die Beschleunigung wird z.B. von einem Beschleunigungssensor im Fahrzeug erfasst.

Der Motor und das Fahrzeug sind ein Beispiel für ein technisches System, für das die Sensordaten bereitgestellt werden. Das technische System kann ein Roboter oder eine Maschine sein.

Das neuronale Netzwerk wird dazu trainiert, ausgehend vom Anfangswert des jeweiligen Segments den Endwert des jeweiligen Segments zum Endzeitpunkt des jeweiligen Segments vorherzusagen. Das neuronale Netzwerk wird insbesondere dazu trainiert, wenigstens einen Zwischenwert zwischen dem Anfangswert und dem Endwert vorherzusagen. Beispielsweise wird das neuronale Netzwerk dazu trainiert, abhängig vom Anfangswert einen Zwischenwert und abhängig vom Zwischenwert den Endwert vorherzusagen. Beispielsweise wird das neuronale Netzwerk dazu trainiert, eine Reihe von Zwischenwerten vorherzusagen. Das neuronale Netzwerk wird z.B. dazu trainiert, einen ersten Zwischenwert in der Reihe abhängig vom Anfangswert vorherzusagen. Das neuronale Netzwerk wird z.B. dazu trainiert, die anderen Zwischenwerte in der Reihe abhängig vom jeweils vorhergehenden Zwischenwert vorherzusagen. Das neuronale Netzwerk wird z.B. dazu trainiert, den Endwert abhängig von einen letzten Zwischenwert in der Reihe vorherzusagen.

Das Verfahren umfasst einen Schritt 502.

Im Schritt 502 werden k Zeitreihen von Sensordaten für das Training und eine Validierung bereitgestellt.

Beispielsweise werden k1 Zeitreihen von Sensordaten für das Training bereitgestellt. Beispielsweise werden k2 Zeitreihen von Sensordaten für die Validierung bereitgestellt. Im Beispiel sind die Zeitreihen für das Training von den Zeitreihen für die Validierung verschieden. Im Beispiel ist k=k1+k2.

Die Zeitreihen weisen im Beispiel jeweils eine Länge L auf.

Beispielsweise werden die Sensordaten in Zeitreihen mit jeweils einer Gesamtlänge L bereitgestellt. Beispielsweise umfassen die Sensordaten je Zeitreihe 3072 Messwerte. Das bedeutet, die Zeitreihen weisen jeweils eine Gesamtlänge L=3072 auf.

Im Schritt 502 wird eine initiale Länge s der Segmente vorgegeben. In einer ersten Iteration des Schritts 502 wird z.B. als vorgegebene Länge s ein ganzzahliger Teiler der Gesamtlänge L vorgegeben. Beispielsweise wird die Länge s=512 vorgegeben.

Im Schritt 502 wird eine initiale Anzahl d der Segmente vorgegeben. Beispielsweise wird für die vorgegebene Länge s=512 bei der Gesamtlänge L=3072 die Anzahl d=6 vorgegeben. Optional wird die initiale Anzahl d abhängig von anderen Größen, vorzugsweise, s abgeleitet.

Beispielsweise wird die Anzahl d so groß bestimmt, dass die Batches, d.h. die Trainingsdatensätze, im Training immer noch in den für das Training verfügbaren Speicher passen. Dabei wird beachtet, dass diese Bedingung abhängig davon ist, wie lang die Segmente sind. D.h. längere Segmente bedeutet mehr Werte und mehr Speicher.

Die Länge s der Segmente in den nächsten Trainingsdatensätzen wird z.B. in den einzelnen Iterationen abhängig von der Länge s der Segmente in den bereits verwendeten Trainingsdatensätzen bestimmt.

Es wird z.B. in den Iterationen eine zunehmend längere Länge s der Segmente aus der Zeitreihe vorgegeben.

Beispielsweise wird die Länge der Segmente als ganzzahliges Vielfaches der vorgegebenen Länge und ganzzahliger Teiler der Gesamtlänge bestimmt.

Es kann vorgesehen sein, dass die Anzahl d der Segmente in den jeweiligen Trainingsdatensätzen beibehalten wird. Es kann vorgesehen sein, dass mit zunehmender Länge s eine abnehmende Anzahl d der Segmente in den jeweiligen Trainingsdatensätzen vorgegeben wird. Das bedeutet, die Anzahl der Segmente in den folgenden Trainingsdatensätzen ist kleiner als die vorherige Anzahl.

Das Verfahren umfasst einen Schritt 504.

Im Schritt 504 werden für eine Iteration des Verfahrens die Zeitreihen von Sensordaten für das Training jeweils in Segmente der Länge s unterteilt.

Die Sensordaten, die Zeitreihen der jeweiligen Gesamtlänge L=3072 umfassen, werden z.B. in der ersten Iteration je Zeitreihe abhängig von der vorgegebenen Länge s= 512 in d=6 Segmente unterteilt, die jeweils 512 Messwerte umfassen.

Die Sensordaten, die Zeitreihen der jeweiligen Gesamtlänge L=3072 umfassen, werden z.B. in einer zweiten Iteration je Zeitreihe in d=3 Segmente der Länge s=1024 unterteilt, d.h. in Segmente, die jeweils 1024 Messwerte umfassen.

In einer dritten Iteration bleibt für die Zeitreihen der jeweiligen Gesamtlänge L=3072 je Zeitreihe ein Segment der Länge s=L=3072, d.h. ein Segment, das die 3072 Messwerte der Zeitreihe umfasst.

Das Verfahren umfasst einen Schritt 506.

Im Schritt 506 werden die Segmente in k1*(L/s)/d Trainingsdatensätze mit jeweils d Segmenten zusammengefasst. Die Trainingsdatensätze umfassen voneinander verschiedene Segmente, d.h., die Trainingsdatensätze insgesamt umfassen das jeweilige Segmente einmal.

D.h. in der ersten Iteration werden k1 Trainingsdatensätze bestimmt, die jeweils d=6 Segmente mit jeweils einer Länge s=512 aufweisen.

D.h. in einer zweiten Iteration werden k1 Trainingsdatensätze bestimmt, die jeweils d=3 Segmente mit jeweils einer Länge s=1024 aufweisen.

Das bedeutet, dass je Iteration mehrere Trainingsdatensätze bestimmt werden, die Segmente derselben Länge umfassen.

Der Schritt 506 kann vorsehen, das Training zu beenden, wenn eine Neuberechnung der Länge s zu keiner Änderung der Trainingsdatensätze mehr führt, oder nach einer fixen Anzahl von Iterationen, d.h. von Epochen.

Eine Neuberechnung der Länge s führt für das Beispiel der Gesamtlänge L=3072 unter den Bedingungen dass die Länge der Segmente als ganzzahliges Vielfaches der vorgegebenen Länge und ganzzahliger Teiler der Gesamtlänge zu bestimmen ist, zu keiner Änderung der Trainingsdatensätze mehr, weil in einer dritten Iteration nur noch k1 Trainingsdatensätze bestimmt werden können, die jeweils eine der k1 Zeitreihen umfassen, d.h. die Länge s=L=3072 aufweisen.

Das Verfahren ist nicht auf diese Bedingungen beschränkt. Es können auch Segmente mit Längen verwendet werden, die keine ganzzahligen Teiler der Gesamtlänge sind. Es können auch Segmente mit Längen verwendet werden, die kein ganzzahliges Vielfaches der vorgegebenen Länge sind. Gegebenenfalls bei der Unterteilung der jeweiligen Zeitreihe übrig bleibende Messwerte der jeweiligen Zeitreihe bleiben in diesem Fall beispielsweise unberücksichtigt. Die Unterteilung kann so gewählt werden, dass die übrig bleibenden Messwerte am Beginn oder am Ende der jeweiligen Zeitreihe liegen, oder zwischen zwei Segmenten Messwerte übrig gelassen werden.

Es kann vorgesehen sein, dass das neuronale Netzwerk optional vor dem Beenden des Trainings nach dem Training mit den Trainingsdatensätzen, die die Segmente umfassen, mit einem Trainingsdatensatz trainiert, der die Sensordaten aus den k1 Zeitreihen für das Training umfasst.

Das Verfahren umfasst einen Schritt 508.

Im Schritt 508 wird das neuronale Netzwerk mit den Trainingsdatensätzen zur Vorhersage der Lösung der gewöhnlichen Differentialgleichung trainiert. Das bedeutet, das neuronale Netzwerk wird mit Trainingsdaten der Dimension ((k1(L/s))/d,d,s) trainiert. Das neuronale Netzwerk wird z.B. wie in Neural Ordinary Differential Equations beschrieben trainiert.

Das bedeutet, das neuronale Netzwerk wird mit mehreren der Trainingsdatensätzen trainiert, die die Segmente derselben Länge umfassen.

Dies wird am Beispiel der Segmente 202 beschrieben. Die Segmente 202 umfassen jeweils den Anfangswert 204 aus der Zeitreihe und zu einem Endzeitpunkt des Segments 202 den Endwert 206 aus der Zeitreihe. Das neuronale Netzwerk wird dazu trainiert, ausgehend vom Anfangswert 204 des jeweiligen Segments 202 den Endwert 206 des jeweiligen Segments 202 zum Endzeitpunkt des jeweiligen Segments 202 vorherzusagen. Das neuronale Netzwerk wird insbesondere dazu trainiert, die Zwischenwerte zu den Zwischenzeitpunkten vorherzusagen.

Es kann vorgesehen sein, dass das neuronale Netz für wenigstens einen Trainingsdatensatz mit dem Mehrfachschießverfahren zur Vorhersage der Lösung der gewöhnlichen Differentialgleichung trainiert wird.

Das neuronale Netzwerk wird z.B. mit den Trainingsdatensätzen, die die Segmente derselben Länge umfassen, trainiert, bis erkannt wird, dass ein Abbruchkriterium erfüllt ist.

Beispielsweise wird im Schritt 508 mit den Validierungsdaten eine Güte der Vorhersage abhängig von den Validierungsdaten bestimmt. Das Abbruchkriterium ist z.B. erfüllt, wenn die Güte der Vorhersage nach dem Training des neuronalen Netzwerks mit zwei aufeinanderfolgenden Trainingsdatensätzen unverändert ist oder sich um weniger als einen vorgegebenen Wert verbessert.

Anschließend wird der Schritt 504 ausgeführt.

Ein erneutes Ausführen des Schritts 504 unterbleibt beispielsweise, wenn ein Endkriterium erfüllt ist.

Das Verfahren erhöht die Länge der Sequenzen. Wenn die Länge maximal ist - im Beispiel L=3072, und diese nicht mehr erhöht werden kann, ist das Endkriterium erreicht.

Es kann auch eine Liste von Längen vorgesehen sein, die das Verfahren durchgeht. Das Endkriterium ist erfüllt, wenn das Ende der Liste erreicht ist.

Das Verfahren kann vorsehen, die Liste derart durchzugehen, dass das Verfahren vor dem Erreichen des Endkriteriums erneut eine kleinere Länge verwendet.

Das bedeutet, das neuronale Netzwerk wird insbesondere bis das Endkriterium erfüllt ist, mit den Trainingsdatensätzen mit zunehmender Länge der Segmente trainiert, wenn erkannt wird, dass das Abbruchkriterium erfüllt ist.

Anschließend ist das Training beendet.

Es kann vorgesehen sein, dass das Verfahren mit dem Ende des Trainings endet.

Es kann vorgesehen sein, dass das Verfahren Schritte für eine Bereitstellung von Sensordaten mit dem trainierten neuronalen Netzwerk umfasst. Es kann vorgesehen sein, dass die Schritte für die Bereitstellung von Sensordaten mit dem trainierten neuronalen Netzwerk unabhängig vom Training separat ausgeführt werden.

Für eine Bereitstellung von Sensordaten mit dem trainierten neuronalen Netzwerk ist ein Schritt 510 vorgesehen.

Im Schritt 510 wird ein Anfangswert für eine Zeitreihe von Sensordaten bereitgestellt.

Es kann vorgesehen sein, dass der Anfangswert insbesondere über die Schnittstelle 106 empfangen wird.

Anschließend wird ein Schritt 512 ausgeführt.

Im Schritt 512 werden mit dem trainierten neuronalen Netzwerk insbesondere von der Vorrichtung 100 in mehreren Iterationen Vorhersagen der Lösung der gewöhnlichen Differentialgleichung bestimmt.

Die Vorhersage wird in einer initialen Iteration abhängig vom Anfangswert als Eingangsgröße des trainierten neuronalen Netzwerks bestimmt.

Die Vorhersage der Lösung der auf die initiale Iteration folgenden Iterationen wird jeweils abhängig von der Vorhersage der Lösung der jeweils vorangegangenen Iteration bestimmt.

Die aufeinanderfolgenden Vorhersagen der Lösung stellen die Sensordaten der Zeitreihe dar.

Es kann vorgesehen sein, dass die Vorhersagen der Lösung insbesondere über die Schnittstelle 106 ausgegeben werden.

In Figur 6 ist ein beispielhafter Trainingsverlauf in einer logarithmischen Skala dargestellt. In Figur 6 ist ein Verlauf 602 einer mittleren quadratischen Abweichung der Vorhersage für die Trainingsdatensätze dargestellt. In Figur 6 ist ein Verlauf 604 einer mittleren quadratischen Abweichung der Vorhersage für die Validierungsdaten dargestellt.

In Bereichen 606 ist die quadratische Abweichung der Vorhersage für die Validierungsdaten zwar kleiner als die quadratische Abweichung der Vorhersage für die Trainingsdatensätze. Jedoch steigt die quadratische Abweichung der Vorhersage für die Validierungsdaten für mehr als zwei aufeinanderfolgende Trainingsdatensätze an, d.h. das beispielhafte Abbruchkriterium ist erfüllt.

## Patentansprüche

1. Computerimplementiertes Verfahren zur Bereitstellung von Sensordaten, wobei ein neuronales Netzwerk eine gewöhnliche Differentialgleichung zur Bereitstellung von Sensordaten modelliert, **dadurch gekennzeichnet, dass** die Sensordaten in einer Zeitreihe (200) bereitgestellt werden (502), wobei aus den Sensordaten Trainingsdatensätze (300) mit zunehmend längeren Segmenten (202) aus der Zeitreihe (200) bestimmt werden (506), und das neuronale Netzwerk mit den Trainingsdatensätzen (300) mit zunehmender Länge der Segmente (202) zur Vorhersage einer Lösung der gewöhnlichen Differentialgleichung trainiert wird (508).

2. Verfahren nach Anspruch 1, **dadurch gekennzeichnet, dass** aus den Sensordaten Trainingsdatensätze (300) bestimmt werden (506), die eine mit zunehmend längeren Segmenten (202) aus der Zeitreihe (200) abnehmende Anzahl von Segmenten (202) umfassen.

3. Verfahren nach einem der vorherigen Ansprüche, **dadurch gekennzeichnet, dass** eine Länge der Segmente (202) in einem ersten Trainingsdatensatz (300) vorgegeben wird (502), und eine Länge der Segmente (202) in einem zweiten Trainingsdatensatz (300) abhängig von der vorgegebenen Länge der Segmente (202) im ersten Trainingsdatensatz (300) bestimmt wird (508).

4. Verfahren nach Anspruch 2 oder 3, **dadurch gekennzeichnet, dass** die Sensordaten mit einer Gesamtlänge bereitgestellt werden (502), wobei als vorgegebene Länge ein ganzzahliger Teiler der Gesamtlänge vorgegeben wird (502), wobei die Länge der Segmente (202) im zweiten Trainingsdatensatz (300) als ganzzahliges Vielfaches der vorgegebenen Länge und ganzzahliger Teiler der Gesamtlänge bestimmt wird (508).

5. Verfahren nach einem der vorherigen Ansprüche, **dadurch gekennzeichnet, dass** die Segmente (202) jeweils einen Anfangswert aus der Zeitreihe (200) und zu einem Endzeitpunkt des Segments (202) einen Endwert aus der Zeitreihe (200) umfassen, wobei das neuronale Netzwerk dazu trainiert wird (508), ausgehend vom Anfangswert des jeweiligen Segments (202) den Endwert des jeweiligen Segments (202) zum Endzeitpunkt des jeweiligen Segments (202) vorherzusagen.

6. Verfahren nach einem der vorherigen Ansprüche, **dadurch gekennzeichnet, dass** neuronale Netz für wenigstens einen Trainingsdatensatz (300) mit dem Mehrfachschießverfahren zur Vorhersage der Lösung der gewöhnlichen Differentialgleichung trainiert wird (508).

7. Verfahren nach einem der vorherigen Ansprüche, **dadurch gekennzeichnet, dass** mehrere Trainingsdatensätze (300) bestimmt werden (506), die Segmente (202) derselben Länge umfassen, wobei das neuronale Netzwerk mit mehreren der Trainingsdatensätzen (300) trainiert wird (508), die die Segmente (202) derselben Länge umfassen.

8. Verfahren nach Anspruch 7, **dadurch gekennzeichnet, dass** das neuronale Netzwerk mit den Trainingsdatensätzen, die die Segmente (202) derselben Länge umfassen, trainiert wird (508), bis erkannt wird, dass ein Abbruchkriterium erfüllt ist, und das neuronale Netzwerk mit den Trainingsdatensätzen mit zunehmender Länge der Segmente (202) trainiert wird (508), wenn erkannt wird dass das Abbruchkriterium erfüllt ist.

9. Verfahren nach Anspruch 8, **dadurch gekennzeichnet, dass** Validierungsdaten bestimmt werden (502), wobei die Validierungsdaten ein Segment (202) oder mehrere Segmente (202) aus der Zeitreihe (200) oder aus verschiedenen Zeitreihen umfassen, wobei die Vorhersage für die Validierungsdaten bestimmt wird (508), wobei eine Güte der Vorhersage abhängig von den Validierungsdaten bestimmt wird, und wobei das Abbruchkriterium erfüllt ist, wenn die Güte der Vorhersage nach dem Training des neuronalen Netzwerks mit aufeinanderfolgenden Trainingsdatensätzen (300) unverändert ist oder sich um weniger als einen vorgegebenen Wert verbessert.

10. Verfahren nach einem der vorherigen Ansprüche, **dadurch gekennzeichnet, dass** das neuronale Netzwerk nach dem Training mit den Trainingsdatensätzen (300) mit zunehmender Länge der Segmente (202) mit einem Trainingsdatensatz (300) trainiert wird (508), der die Sensordaten aus der Zeitreihe (200) umfasst.

11. Verfahren nach einem der vorherigen Ansprüche, **dadurch gekennzeichnet, dass** ein Anfangswert für eine Zeitreihe (200) von Sensordaten bereitgestellt wird (510), und mit dem trainierten neuronalen Netzwerk in mehreren Iterationen Vorhersagen der Lösung der gewöhnlichen Differentialgleichung bestimmt werden (512), wobei die Vorhersage in einer initialen Iteration abhängig vom Anfangswert als Eingangsgröße des trainierten neuronalen Netzwerks bestimmt wird, und die Vorhersage der Lösung der auf die initiale Iteration folgenden Iterationen jeweils abhängig von der Vorhersage der Lösung der jeweils vorangegangenen Iteration bestimmt werden, wobei die aufeinanderfolgenden Vorhersagen der Lösung die Sensordaten der Zeitreihe (200) darstellen.

12. Verfahren nach einem der vorherigen Ansprüche, wobei die Sensordaten eine Drehzahl oder eine Temperatur, insbesondere eines Motors, umfassen, insbesondere wobei die Drehzahl mit einem Drehzahlfühler oder die Temperatur mit einem Temperatursensor erfasst wird, oder wobei die Sensordaten einen Lenkwinkel oder eine Gierrate oder eine Beschleunigung insbesondere eines Fahrzeugs, umfassen, insbesondere wobei der Lenkwinkel mit einem Lenkwinkelsensor oder die Gierrate mit einem Gierratensensor oder die Beschleunigung mit einem Beschleunigungssensor erfasst wird.

13. Vorrichtung (100) zur Bereitstellung von Sensordaten, insbesondere Sensor, wobei die Vorrichtung (100) ein neuronales Netzwerk umfasst, wobei das neuronale Netzwerk eine gewöhnliche Differentialgleichung zur Bereitstellung von Sensordaten modelliert, **dadurch gekennzeichnet, dass** die Vorrichtung wenigstens eine Prozessor (102) und wenigstens einen Speicher (104) umfasst, wobei der wenigstens eine Speicher (104) vom wenigstens einen Prozessor (102) ausführbare Instruktionen umfasst, bei deren Ausführung durch den wenigstens einen Prozessor (102) die Vorrichtung (100) das Verfahren nach einem der Ansprüche 1 bis 12 ausführt.

14. Computerprogramm, **dadurch gekennzeichnet, dass** das Computerprogramm von einem Computer ausführbare Instruktionen umfasst, bei deren Ausführung durch den Computer das Verfahren nach einem der Ansprüche 1 bis 12 abläuft.
